# EUROPEAN PATENT APPLICATION

(11) **EP 4 789 908 A1**
(43) Date of publication of application: **12.08.2026**
(21) Application number: 25769524.7
(22) Date of filing: 10.03.2025
(51) Int. Cl.: B60L 58/12, B60L 58/14, B60L 58/15, B60L 3/00, H04B 7/185

(54) **SATELLITE COMMUNICATION-BASED VEHICLE BATTERY MANAGEMENT METHOD**

(30) Priority: 15.03.2024 CN 202410299591
(71) Applicant: University of Sanya, Sanya, Hainan 572022 (CN); Zhejiang Geely Holding Group Co., Ltd., Hangzhou, Zhejiang 310051 (CN)
(72) Inventor: LI, Shufu, Hangzhou, Zhejiang 310051 (CN)
(74) Representative: Boult Wade Tennant LLP
(86) International application number: PCT/CN2025/081516
(87) International publication number: WO 2025/190194

(57) **Abstract**

A vehicle battery management method based on satellite communication. After a charge amount in a free charge amount interval of a battery cell in a battery assembly of a vehicle (101) is exhausted and the battery cell is locked, unlocking information sent by a cloud platform (103) through satellite (102) communication is received, where the unlocking information is used to indicate that a user has paid a fee for using a paid charge amount interval of the battery cell; and an unlocking process is performed on use of the battery cell to enable the battery cell to continue discharging, where the charge amount of each battery cell in the battery assembly is configured with a free charge amount interval for a user to freely use and a paid charge amount interval that requires payment to unlock and use.

## Description

The present application claims priority to Chinese Patent Application No. 202410299591.0, filed with the China National Intellectual Property Administration on March 15, 2024 and entitled "VEHICLE BATTERY MANAGEMENT METHOD BASED ON SATELLITE COMMUNICATION", which is hereby incorporated by reference in its entirety.

### TECHNICAL FIELD

The present application relates to, but is not limited to, the field of vehicle battery technologies, and in particular, to a vehicle battery management method based on satellite communication.

### BACKGROUND

With the continuous advancement of electric vehicle technology, the demand for higher performance, e.g., in terms of the driving range of electric vehicles, is also increasing year by year. In order to meet the high-performance demand of the electric vehicles, the industry usually adjusts batteries of the electric vehicles at present, such as increasing the number of batteries and improving battery energy density, so as to provide kinetic energy supply that can meet the high performance demand of the electric vehicles. This battery adjustment method imposes higher requirements on vehicle battery management.

### SUMMARY

The following is a summary of the subject matter described in detail herein. This summary is not intended to limit the protection scope of the claims.

The present application provides a vehicle battery management method based on satellite communication, where a vehicle communicates with a cloud platform through a satellite, the data transmission is efficient and reliable, and the real-time performance of vehicle battery management is higher. By means of online charge amount management for a battery cell, battery loss can be reduced, the service life of the battery can be prolonged, and the safety risks of the vehicle battery can also be reduced at the same time, thereby ensuring the safety of the vehicle and users.

In a first aspect, the present application provides a vehicle battery management method based on satellite communication, including:
receiving, after a charge amount in a free charge amount interval of a battery cell in a battery assembly of a vehicle is exhausted and the battery cell is locked, unlocking information sent by a cloud platform through satellite communication, where the unlocking information is used to indicate that a user has paid a fee for using a paid charge amount interval of the battery cell; and
performing an unlocking process on use of the battery cell to enable the battery cell to continue discharging;
where the charge amount of each battery cell in the battery assembly is configured with a free charge amount interval for a user to freely use and a paid charge amount interval that requires payment to unlock and use.

In a possible design of the first aspect, the method further includes:
detecting consistency information of the battery assembly;
sending the consistency information to the cloud platform based on satellite communication; and
receiving battery management information returned by the cloud platform based on satellite communication, and managing the battery assembly according to the battery management information.

In a possible design of the first aspect, the detecting the consistency information of the battery assembly includes:
detecting the consistency information through a battery management unit of the battery assembly according to a preset time period; where the consistency information includes consistency information of the battery cell, consistency information of the free charge amount interval, and consistency information of the paid charge amount interval.

In a possible design of the first aspect, the sending the consistency information to the cloud platform based on satellite communication includes:
sending the consistency information to a target satellite through a vehicle-mounted satellite terminal, so that the target satellite sends the consistency information to the cloud platform.

In a possible design of the first aspect, the managing the battery assembly according to the battery management information includes:
controlling an operating state of the battery cell in the battery assembly according to the battery management information, where the operating state of the battery cell includes a locked state, an unlocked state, a charging state or a discharging state.

In a possible design of the first aspect, the method further includes:
sending target prompt information to an output apparatus according to the battery management information, so that the output apparatus displays the target prompt information; where the output apparatus includes a vehicle-mounted terminal and/or a mobile terminal; and the target prompt information includes at least one of payment information, alarm information and vehicle management operation information.

In a second aspect, the present application provides a vehicle battery management method based on satellite communication, including:
receiving unlocking information sent by a cloud platform, where the unlocking information is used to indicate that a user has paid a fee for using a paid charge amount interval of a battery cell in a battery assembly of a vehicle; and
sending the unlocking information to the vehicle.

In a possible design of the second aspect, the method further includes:
acquiring consistency information sent by the vehicle, and sending the consistency information to the cloud platform; and
receiving battery management information returned by the cloud platform, and sending the battery management information to the vehicle.

In a third aspect, the present application provides a vehicle battery management method based on satellite communication, and the method includes:
generating unlocking information after determining that a user has paid a fee for using a paid charge amount interval of a battery cell in a battery assembly of a vehicle, where the unlocking information is used to indicate that the user has paid the fee for using the paid charge amount interval of the battery cell; and
sending the unlocking information to the vehicle through satellite communication.

In a possible design of the third aspect, the method further includes:
acquiring consistency information sent by the vehicle based on satellite communication;
determining battery management information corresponding to the battery assembly based on the consistency information; and
sending the battery management information to the vehicle through satellite communication.

In a possible design of the third aspect, the determining the battery management information corresponding to the battery assembly based on the consistency information includes:
determining a real-time state of each battery cell in the battery assembly based on the consistency information;
determining a target management operation corresponding to the battery assembly based on the real-time state of each battery cell; and
generating the battery management information corresponding to the battery assembly based on the real-time state of each battery cell and the target management operation.

In a possible design of the third aspect, the sending the battery management information to the vehicle through satellite communication includes:
sending the battery management information to a target satellite, so that the target satellite sends the battery management information to a vehicle-mounted satellite terminal of the vehicle.

In a fourth aspect, the present application provides a vehicle battery management system based on satellite communication, including a vehicle, a target satellite and a cloud platform, where the vehicle is configured to execute the vehicle battery management method based on satellite communication as described in any one of the above aspects; the target satellite is configured to execute the vehicle battery management method based on satellite communication as described in any one of the above aspects; and the cloud platform is configured to execute the vehicle battery management method based on satellite communication as described in any one of the above aspects.

The present application provides a vehicle battery management method based on satellite communication, which can be used in the field of vehicle battery technologies. In this solution, after the charge amount in the free charge amount interval of the battery cell in the battery assembly is exhausted and the battery cell is locked, the vehicle receives the unlocking information sent by the cloud platform through satellite communication, where the unlocking information is used to indicate that the user has paid a fee for using the paid charge amount interval of the battery cell; and performs the unlocking process on use of the battery cell to enable the battery cell to continue discharging, where the charge amount of each battery cell in the battery assembly is configured with the free charge amount interval for the user to freely use and the paid charge amount interval that requires payment to unlock and use. In this way, the data transmission interaction can be performed between the vehicle and the cloud platform through satellite, which can improve the efficiency and reliability of the data transmission, achieve online real-time management of the charge amount of the battery cell in the vehicle, avoid abnormal situations such as excessive charging and discharging of the vehicle battery, reduce battery loss, prolong the service life of the battery, and can also reduce the safety risks of the vehicle battery at the same time, thereby ensuring the safety of the vehicle and users.

Other aspects will become apparent after reading and understanding the accompanying drawings and detailed description.

### BRIEF DESCRIPTION OF DRAWINGS

The accompanying drawings of the embodiments in the present invention will be briefly described in the below. Obviously, the accompanying drawings described below are merely some embodiments of present application, and for those ordinary skilled in the art, other accompanying drawings may be obtained based on these accompanying drawings without any creative effort.
FIG. 1 is a schematic diagram of an application scenario of a vehicle battery management method based on satellite communication according to the present application.
FIG. 2 is a schematic flowchart of a vehicle battery management method based on satellite communication according to a first embodiment of the present application.
FIG. 3 is a schematic flowchart of a vehicle battery management method based on satellite communication according to a second embodiment of the present application.
FIG. 4 is a schematic flowchart of a vehicle battery management method based on satellite communication according to a third embodiment of the present application.
FIG. 5 is a schematic flowchart of a vehicle battery management method based on satellite communication according to a fourth embodiment of the present application.
FIG. 6 is a schematic flowchart of a vehicle battery management method based on satellite communication according to a fifth embodiment of the present application.
FIG. 7 is a schematic flowchart of a vehicle battery management method based on satellite communication according to a sixth embodiment of the present application.
FIG. 8 is a schematic architectural diagram of a vehicle battery management method based on satellite communication according to the present application.

### DETAILED DESCRIPTION OF EMBODIMENTS

The embodiments of the present invention will be described below with reference to specific examples, and other advantages and effects of the embodiments of the present invention can be easily understood by those skilled in the art from the content disclosed in this specification. The embodiments of the present invention can also be implemented or applied through other different specific implementation methods, and various details in this specification can also be modified or changed based on different perspectives and applications without departing from the spirit of the embodiments of the present invention. It should be noted that, the following embodiments and the features in the embodiments may be combined with each other when there is no conflict. It should also be understood that, the terms used in the embodiments of the present invention are intended to describe specific embodiments, rather than to limit the protection scope of the embodiments of the present invention. The test methods without specific situations specified in the following embodiments are usually carried out under conventional situations or according to the situations recommended by manufacturers.

When the embodiments provide numerical ranges, it should be understood that, unless otherwise specified in the embodiments of the present invention, two endpoints of each numerical range and any value between the two endpoints can be selected. Unless otherwise defined, all technical and scientific terms used in the embodiments of the present invention, as well as the prior art knowledge of those skilled in the art and the description of the embodiments of the present invention, may also be used to implement the embodiments of the present invention by using any method, device, and material in the prior art similar to or equivalent to the method, device, and material in the embodiments of the present invention.

With the continuous advancement of the electric vehicle technology, the demand for higher performance, e.g., in terms of the driving range of electric vehicles is also increasing year by year. Taking the improvement of the driving range of an electric vehicle as an example, current methods in the industry to enhance the driving range of the electric vehicle mainly involve increasing battery capacity and increasing battery energy density. A method for increasing battery capacity is mainly to provide more electric energy by expanding the size and the energy storage amount of the battery, so as to prolong the driving distance of the electric vehicle. A method for improving battery energy density is mainly to enhance energy storage efficiency and electric energy output density of the battery, and store more energy under the same volume and weight, so as to achieve a longer driving range under limited battery capacity.

However, this method of adjusting the vehicle battery also carries certain risks, which can easily lead to abnormal situations such as excessive charging and discharging of the vehicle battery. For example, a high-capacity and high-density battery may lead to accelerated decay rates and even cause self-ignition problems. Furthermore, during the use of the vehicle, if the battery is subjected to excessive charging and discharging, the consistency of the battery will be seriously destroyed, thereby accelerating the loss speed of the battery and shortening the service life of the battery. In addition, the excessive charging and discharging may also cause excessive energy stored inside the battery, increasing the risk of self-ignition. Each time the battery is charged and discharged, irreversible damage will be caused to the battery, and the damage will produce an accumulation effect, and the more times, the more significant the influence on the battery performance. Furthermore, in the practical application process, consumers may intentionally or unintentionally overcharge or over-discharge the battery due to a lack of understanding of the battery maintenance characteristics, which seriously affects the service life of the battery and increases the risk of the battery thermal runaway.

In an optional manner, the vehicle either does not have adjustment measures for abnormal situations of the battery such as excessive charging and discharging of the battery, or the adjustment measures are relatively lagged. The management on the battery cell of the vehicle is not high in real-time performance, which can lead to increased loss of the vehicle battery and shortened service life of the battery. And at the same time, there are also certain safety risks, for example, self-ignition occurs on the vehicle battery.

On this basis, during the research process of a vehicle battery management method based on satellite communication, the inventor finds that the vehicle may achieve data interaction with the cloud platform based on satellite communication, and the satellite communication may improve the efficiency and real-time performance of data transmission, ensuring reliable transmission of data. At the same time, the vehicle can utilize the powerful computing power of the cloud platform for data statistics and analysis, so as to achieve real-time safety management on the charge amount of the battery cell in the vehicle. Specifically, after an charge amount in a free charge amount interval of a battery cell in a battery assembly of a vehicle is exhausted and the battery cell is locked, unlocking information sent by the cloud platform through satellite communication is received, where the unlocking information is used to indicate that a user has paid a fee for using a paid charge amount interval of the battery cell. Then, the vehicle may perform an unlocking process on use of the battery cell to enable the battery cell to continue discharging. In this way, the vehicle configures the charge amount of the battery cell in the battery assembly with the free charge amount interval for the user to freely use and the paid charge amount interval that requires payment to unlock and use, and the unlocking information is transmitted and interacted between the vehicle and the cloud platform through satellite, which can improve the efficiency and reliability of the data transmission, achieve online real-time management of the charge amount of the battery cell in the vehicle, avoid abnormal situations such as excessive charging and discharging of the vehicle battery, reduce battery loss, prolong the service life of the battery, and can also reduce the safety risks of the vehicle battery at the same time, thereby ensuring the safety of the vehicle and users.

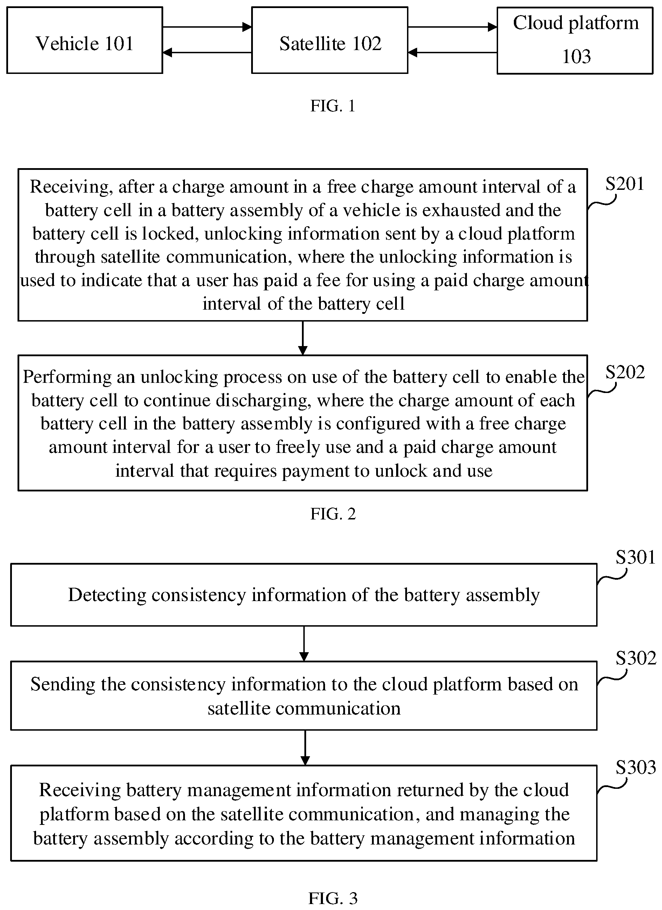

Exemplarily, FIG. 1 is a schematic diagram of an application scenario of a vehicle battery management method based on satellite communication according to the present application. As shown in FIG. 1, the application scenario of the solution provided in the present application includes a vehicle 101, a satellite 102, and a cloud platform 103. The vehicle 101 collects consistency information of a battery assembly, and then uploads the consistency information to the satellite 102. The satellite 102 receives the consistency information uploaded by the vehicle 101, and sends the consistency information to the cloud platform 102. The cloud platform 102 generates battery management information of the vehicle based on the consistency information sent by the satellite 102, and sends the battery management information to the satellite 102. The satellite 102 receives the battery management information returned by the cloud platform 103, and sends the battery management information to the vehicle 101, and the vehicle 101 may implement safety management for the battery assembly based on the battery management information.

In addition, after a charge amount in a free charge amount interval of the battery cell in the battery assembly of the vehicle 101 is exhausted and the battery cell is locked, the vehicle 101 receives unlocking information sent by the cloud platform 103 through satellite 102 communication, and the vehicle 101 may perform an unlocking process on use of the battery cell to enable the battery cell to continue discharging, thereby satisfying the power requirement of the user and ensuring the safety and stability of the battery assembly in the vehicle.

FIG. 2 is a schematic flowchart of a vehicle battery management method based on satellite communication according to a first embodiment of the present application. As shown in FIG. 2, the vehicle battery management method based on satellite communication includes the following steps.

S201: receiving, after a charge amount in a free charge amount interval of a battery cell in a battery assembly of a vehicle is exhausted and the battery cell is locked, unlocking information sent by a cloud platform through satellite communication, where the unlocking information is used to indicate that a user has paid a fee for using a paid charge amount interval of the battery cell.

S202: performing an unlocking process on use of the battery cell to enable the battery cell to continue discharging, where the charge amount of each battery cell in the battery assembly is configured with a free charge amount interval for a user to freely use and a paid charge amount interval that requires payment to unlock and use.

In the present application, the battery assembly of the vehicle can be configured inside the electric vehicle as its core energy device to provide stable power for the vehicle. The battery assembly of the vehicle includes at least one battery cell, and can further include a battery management unit connected to the at least one battery cell. The battery management unit is configured to manage the battery cell, and implement corresponding detection, charge amount management, and control functions.

Each battery cell may be any one of the following batteries: a lithium battery, a lithium iron phosphate battery, or a solid-state battery. The lithium battery has high energy density and lightweight characteristics, and is suitable for electric vehicle applications having high requirements on energy density and weight. The lithium iron phosphate battery has higher safety and stability, and is suitable for application scenarios requiring higher safety. The solid-state battery, as an emerging technology, has achieved a good balance between high energy density and safety, and provides more reliable and durable power support for the electric vehicle. By selecting an appropriate type of the battery cell, the battery assembly can meet the needs of different vehicles and users, and provide a more flexible and diversified energy solution at the same time.

According to different voltage value ranges, each battery cell includes a free charge amount interval and a paid charge amount region which are preset. In the free charge amount interval, the user can freely use the energy stored by the battery, so as to meet the daily short-distance travel needs. In the paid charge amount interval, the user may pay a certain fee to unlock the additional charge amount, so as to cope with long-distance travel or urgent charging needs. The preset paid charge amount interval refers to an charge amount range preset in a battery usage management unit, and when the remaining charge amount of the battery cell is within this range, the user needs to pay a corresponding fee to continue using the charge amount. The setting of this interval is generally determined according to the user's needs and the strategy of the service provider. The upper and lower limits of this interval may be determined according to battery capacity, model of the electric vehicle, or individual user needs. For example, the preset paid charge amount interval may be set to require payment when the remaining charge amount is lower than 30%. When the remaining charge amount exceeds this interval, the user can freely use the charge amount without paying an additional fee. However, once the charge amount enters the preset paid interval, the user needs to confirm and pay the corresponding fee to continue to use the battery.

Specifically, when the remaining charge amount of a certain battery cell reaches the set paid charge amount interval, the vehicle can lock the paid charge amount interval of the battery cell through the battery management unit, so as to prevent the user from continuing to consume the charge amount, thereby avoiding the excessive discharging of the battery. At the same time, the battery management unit will push confirmation information for use of a paid charge amount to the user, including providing relevant fee information for paying for using the charge amount in the this interval, so that the user confirms and pays the corresponding fee. At this time, the user may choose to pay the additional fee according to actual needs to unlock the paid charge amount interval, so as to obtain additional charge amount support. After the user pays the corresponding fee, the cloud platform will detect that the user has completed the payment, can generate the unlocking information, and send the unlocking information to the vehicle based on satellite communication.

When the remaining charge amount of the battery cell reaches the preset paid charge amount interval, the battery management unit locks the use of the battery cell through software or hardware. A specific locking operation may include a software control locking, a hardware power-off locking, and a remote control locking. The software control locking refers to monitoring and identifying the remaining charge amount situation of the battery cell by a software program in the battery management unit. Once it is detected that the charge amount of a certain battery cell enters the preset paid interval, the software will send an instruction to the battery management unit to request to lock the battery cell. In this way, the battery cell can no longer supply power to the vehicle, thereby limiting the further use of the user. The hardware power-off locking refers to locking the battery cell by using a hardware device. For example, a switch or a circuit breaker may be provided in the battery management unit, and when the charge amount reaches the preset interval, the battery management unit will automatically cut off the connection between the battery and the vehicle, so that the battery cannot output electric power, thereby achieving a locked state. The remote control locking refers to that when the charge amount of a battery cell reaches the preset interval, the battery management unit can be remotely controlled through a network to achieve the locking operation on the battery.

In this solution, it should be understood that the monitoring of the remaining charge amount can be determined by the effective voltage of the battery, the battery management unit or the control unit acquires a real-time voltage of each battery cell, and determines whether to lock or unlock the battery according to a magnitude of the voltage value, a preset effective voltage range corresponding to the free charge amount interval, and an effective voltage range corresponding to the paid charge amount interval.

In the vehicle battery management method based on satellite communication provided in this embodiment, the battery cell can be effectively locked, so that the user needs to pay a fee to continue using the charge amount when the paid charge amount interval is reached. Such a locking mechanism can encourage the user to save the charge amount and use resources reasonably, avoid the excessive charging and discharging of the battery cell in the vehicle, reduce battery loss, prolong the service life of the battery, and promote the sustainable development of the electric vehicle market.

FIG. 3 is a schematic flowchart of a vehicle battery management method based on satellite communication according to a second embodiment of the present application. As shown in FIG. 3, the vehicle battery management method based on satellite communication includes the following steps.

S301: detecting consistency information of the battery assembly.

In the present application, the consistency information can refer to state information of each battery cell in the battery assembly, which may specifically include consistency information of the battery cell, consistency information of the free charge amount interval and consistency information of the paid charge amount interval and the like. The consistency information of the battery cell may include charge amount information, temperature information, voltage information, current information and resistance information of each battery cell, and the like. The consistency information of the free charge amount interval may include voltage information, current information and resistance information of the free charge amount interval of each battery cell, and the like. The consistency information of the paid charge amount interval includes voltage information, current information, and resistance information of the paid charge amount interval of each battery cell, and the like. Of course, the consistency information can further include other types of information, which may be flexibly set based on actual needs, which is not limited in the present application.

In this step, the vehicle can detect the consistency information of the battery assembly in real time during use, so as to acquire the state of each battery cell in real-time. The real-time detection may specifically refer to periodic detection, and the detection period may be flexibly set based on actual needs, which is not limited in the present application.

S302: sending the consistency information to the cloud platform based on satellite communication.

In the present application, the satellite communication may refer to a communication transmission method based on satellite. The cloud platform refers to a computing platform deployed in the cloud, such as a cloud server, which can implement statistical analysis, processing, and calculation of operational data, and generate corresponding control instructions. Specifically, after acquiring the consistency information of a battery assembly, the vehicle can upload the consistency information to a target satellite, and the target satellite forwards the consistency information to the cloud platform, thereby realizing efficient, reliable and accurate transmission of the vehicle data.

S303: receiving battery management information returned by the cloud platform based on the satellite communication, and managing the battery assembly according to the battery management information.

In the present application, the battery management information may refer to a control management instruction for the battery assembly issued by the cloud platform, which may include fault information of the battery assembly, a target management operation (or a management policy), etc. After receiving the consistency information of the battery assembly sent by the vehicle based on satellite communication, the cloud platform can determine whether there is an abnormal fault situation in the battery assembly based on the consistency information, and determine a corresponding management operation with regard to the abnormal fault situation, and then generate the battery management information. The cloud platform can return the battery management information to the vehicle through satellite communication, and the vehicle can receive the battery management information, and perform safety management on the battery assembly based on the battery management information through the control unit and the battery management unit, thereby ensuring the safe and normal operation of the vehicle battery.

In the vehicle battery management method based on satellite communication provided in this embodiment, the vehicle detects the consistency information of the battery assembly, and then sends the consistency information to the cloud platform based on the satellite communication. Then, the vehicle receives the battery management information returned by the cloud platform based on the satellite communication, and manages the battery assembly according to the battery management information. In this way, the vehicle performs data transmission interaction with the cloud platform through satellite communication, which can ensure the real-time performance and accuracy of vehicle battery management, avoid abnormal situations of the vehicle battery, reduce the battery loss, and prolong the service life of the battery, thereby ensuring the safety of the vehicle and users (a consumer, a driver, etc.).

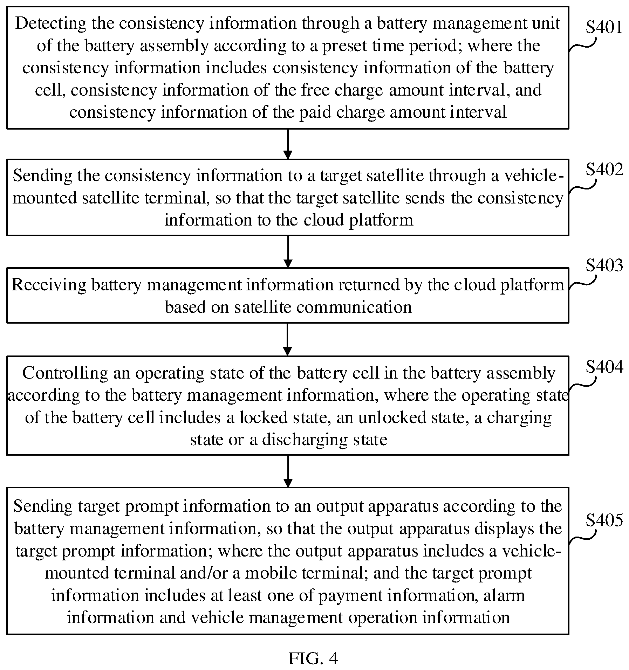

FIG. 4 is a schematic flowchart of a vehicle battery management method based on satellite communication according to a third embodiment of the present application. As shown in FIG. 4, the vehicle battery management method based on satellite communication includes the following steps.

S401: detecting the consistency information through a battery management unit of the battery assembly according to a preset time period; where the consistency information includes consistency information of the battery cell, consistency information of the free charge amount interval, and consistency information of the paid charge amount interval.

In the present application, the preset time period may refer to a preset data detection period, for example, may be 100 milliseconds, 200 milliseconds, or 500 milliseconds, and may specifically be flexibly set based on the data collection performance of the vehicle, which is not limited in the present application. The battery management unit may be used to detect various real-time states of the battery cell.

The consistency information of the battery cell may include at least one of charge amount information, temperature information, resistance information, voltage information, and current information of each battery cell. Specifically, the charge amount information may refer to information such as total charge amount, used charge amount, and remaining charge amount of the battery cell, and may be used to determine whether the capacity of the battery cell is abnormal or whether there is abnormal charge amount usage. The temperature information may refer to real-time temperature information of the battery cell, and may be used to determine whether there are any abnormal situations such as overheating in the battery cell. The voltage information and the current information can provide accurate data about the charge amount of the battery cell, and can be used to determine the actual usage performance of the operating state of the battery cell. The resistance information may refer to internal resistance information of the battery cell, and can be used to determine whether there is in the battery cell, and can be used to assess the internal resistance of the battery. Of course, the consistency information can further include other types of information, which is not limited in the present application.

In this step, the vehicle may periodically detect the consistency information corresponding to each battery cell through the battery management unit according to the preset time period, and the detection can be specifically implemented based on a sensor corresponding to each battery cell. In this way, the vehicle can rapidly acquire the real-time state of the battery cell by periodically detecting the consistency information, thereby improving the real-time performance of subsequent battery management.

S402: sending the consistency information to a target satellite through a vehicle-mounted satellite terminal, so that the target satellite sends the consistency information to the cloud platform.

In the present application, the vehicle-mounted satellite terminal may refer to a satellite communication terminal mounted in the vehicle, and the vehicle-mounted satellite terminal can perform wireless communication with the target satellite. Specifically, after acquiring the consistency information through the battery management unit, the vehicle may send the consistency information to the target satellite through the vehicle-mounted satellite terminal, and after receiving the consistency information sent by the vehicle-mounted satellite terminal, the target satellite may send the consistency information to the cloud platform. In this way, the data transfer transmission is performed between the vehicle and the cloud platform based on the target satellite, which can ensure high efficiency, reliability and accuracy of data transmission.

S403: receiving battery management information returned by the cloud platform based on satellite communication.

S404: controlling an operating state of the battery cell in the battery assembly according to the battery management information, where the operating state of the battery cell includes a locked state, an unlocked state, a charging state or a discharging state.

In the embodiment of the present application, the operating state of the battery cell may refer to a current operating state of the battery cell, and may specifically include a locked state, an unlocked state, a charging state, or a discharging state. The locked state may refer to that the connection between the battery cell and the vehicle is in a disconnected state, and the battery cell cannot output power. The unlocked state may refer to that the battery cell and the vehicle are in a normal connection state, and the battery cell can output power normally. The charging state may refer to that the battery cell is in a process of charging. The discharging state may refer to that the battery cell is a process of discharging. Of course, the operating state may also include other states, which is not limited in the present application.

In this step, the vehicle receives the battery management information returned by the cloud platform based on satellite communication, and then can control the operating state of the battery cell in the battery assembly based on the battery management information. Specifically, the vehicle may adjust the operating state of the battery cell having a fault situation based on the target management operation in the battery management information. The operating state may be switched, or the same operating state can be maintained but specific operating data can be adjusted (such as adjusting charging or discharging rate), so as to achieve the safety management of the battery assembly. Exemplarily, for a battery cell with an ageing situation, the vehicle may adjust it to be in the locked state; for a battery cell with overcharging, the vehicle can switch it from the charging state to the discharging state; and for a battery cell with an excessively high temperature, the vehicle can regulate a discharging rate of the battery cell in the discharge state.

In the present application, the vehicle controls the operating state of the battery cell in the vehicle according to the battery management information, so that corresponding safety management measures can be taken for a faulty battery or an abnormal battery, which improves the real-time performance and effectiveness of battery safety management, and can ensure the overall safety and stability of the battery assembly in the vehicle.

S405: sending target prompt information to an output apparatus according to the battery management information, so that the output apparatus displays the target prompt information; where the output apparatus includes a vehicle-mounted terminal and/or a mobile terminal; and the target prompt information includes at least one of payment information, alarm information and vehicle management operation information.

In the present application, the target prompt information may refer to notification information used to prompt the user, and may refer to payment information, alarm information, vehicle management operation information, etc. The payment information may refer to the specific payment situation of the user for the paid charge amount interval of the battery cell, and the like. The alarm information can specifically refer to alarm prompt information, used to alert the user that the vehicle battery has a fault and needs to stop the vehicle for maintenance. The vehicle management operation information may be a safety management operation performed by the vehicle on the battery cell and is used to prompt the user that the vehicle has adjusted the operating state of the battery cell, so as to ensure that the user can be informed in time. The output apparatus may refer to a display device associated with the vehicle, and specifically may refer to a vehicle-mounted terminal of the vehicle, a mobile terminal of the user, etc., and certainly can further include a wearable device, etc. The present application does not limit the specific type of the output state.

In this step, when the vehicle performs safety management on the battery cell in the battery assembly according to the battery management information, the vehicle may send the target prompt information, which may specifically be alarm information, vehicle management operation information, etc., to the output apparatus. After receiving the target prompt information sent by the vehicle, the output apparatus may display the target prompt information. For example, the target prompt information can be displayed on the vehicle-mounted display screen or on the user's mobile phone. In this way, the vehicle sends the target prompt information to the output apparatus, enabling the output apparatus to display the target prompt information and provide timely reminders to the user, so that the user can take corresponding measures to avoid potential safety risks, thereby ensuring the safety of the vehicle and users.

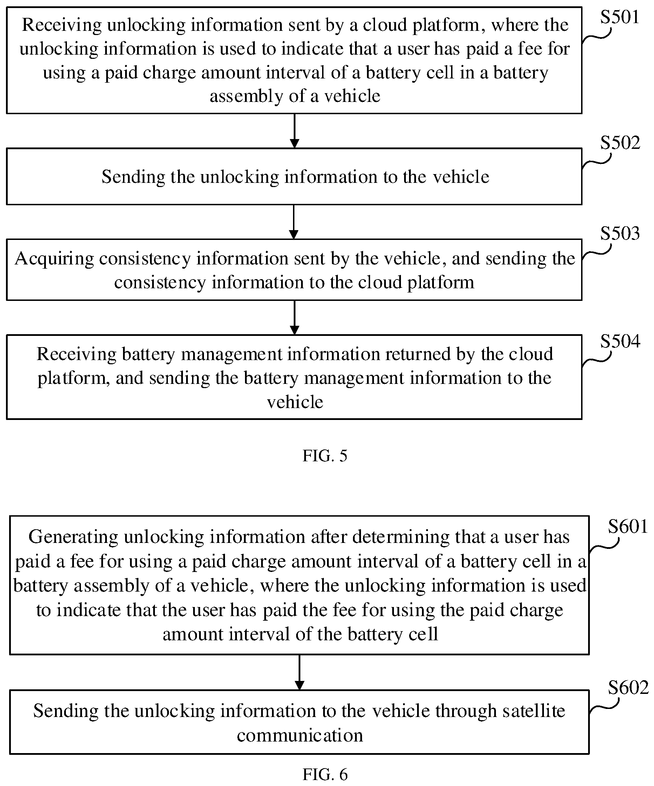

FIG. 5 is a schematic flowchart of a vehicle battery management method based on satellite communication according to a fourth embodiment of the present application. As shown in FIG. 5, the vehicle battery management method based on satellite communication includes the following steps.

S501: receiving unlocking information sent by a cloud platform, where the unlocking information is used to indicate that a user has paid a fee for using a paid charge amount interval of a battery cell in a battery assembly of a vehicle.

S502: sending the unlocking information to the vehicle.

In the present application, if the remaining charge amount of the battery cell reaches the preset paid charge amount interval, the use of the battery cell will be locked, and confirmation information for use of a paid charge amount will be pushed. After receiving the confirmation information for use of the paid charge amount, the user needs to select whether to pay the fee according to actual needs.

After the user completes the payment operation, the related payment system generates payment confirmation information, and sends this information to the cloud platform through the network. The payment confirmation information is used to indicate whether the user has paid the fee for using the paid charge amount interval of the battery cell. After receiving the payment confirmation information, the cloud platform parses and verifies the payment confirmation information to confirm the payment status of the user. Once it is confirmed that the user has completed the payment, the cloud platform generates unlocking information correspondingly, updates a battery use permission of the user, and unlocks the battery cell, so that the user can continue using the charge amount. Throughout the entire process, the payment confirmation information can convey the payment status of the user in time, so as to help the cloud platform to determine whether to unlock the battery cell.

After the battery management unit of the vehicle receives the unlocking information sent by the cloud platform, when the unlocking information indicates that the user has paid the fee for using the paid charge amount interval of the battery cell, it indicates that the user has completed the corresponding payment, complying with the situation for continuing to use the battery cell. Therefore, the battery management unit performs an unlock process, and allows the battery cell to continue discharging. The unlocking processing includes updating a system state to restore the use permission of the battery cell, so that the user can continue to use the charge amount supplied by the battery cell unhindered, without any restrictions.

In the vehicle battery management method based on satellite communication provided in this embodiment, the unlocking information sent by the cloud platform is received, where the unlocking information is used to indicate that the user has paid the fee for using the paid charge amount interval of the battery cell in the battery assembly; and the unlocking information is sent to the vehicle. The method provides a reliable service for the user, ensures that the user can smoothly continue to use the charge amount after completing payment, and also ensures safety and stable operation of the vehicle.

Optionally, based on the fourth embodiment, the vehicle battery management method based on satellite communication can further include the following steps:
S503: acquiring consistency information sent by the vehicle, and sending the consistency information to the cloud platform;
S504: receiving battery management information returned by the cloud platform, and sending the battery management information to the vehicle.

In the vehicle battery management method based on satellite communication provided in this embodiment, the target satellite acquires the consistency information sent by the vehicle based on a satellite communication terminal, and forwards the consistency information to the cloud platform. The cloud platform receives the consistency information sent by the target satellite, generates battery management information based on the consistency information, and returns the battery management information to the target satellite. The target satellite receives the battery management information, and forwards the battery management information to the vehicle, so that the vehicle can perform safety management of the battery assembly based on the battery management information. In this way, the data transfer transmission is performed between the vehicle and the cloud platform based on the target satellite, so that the reliability of data transmission can be improved, and the scenario adaptability is also wider, which can be applied to various geographical scenarios, and ensure the real-time performance of vehicle battery safety management.

FIG. 6 is a schematic flowchart of a vehicle battery management method based on satellite communication according to a fifth embodiment of the present application. As shown in FIG. 6, the vehicle battery management method based on satellite communication includes the following steps.

S601: generating unlocking information after determining that a user has paid a fee for using a paid charge amount interval of a battery cell in a battery assembly of a vehicle, where the unlocking information is used to indicate that the user has paid the fee for using the paid charge amount interval of the battery cell.

S602: sending the unlocking information to the vehicle through satellite communication.

In the present application, after determining that the user has paid the usage fee for the paid charge amount interval of the battery cell in the battery assembly of the vehicle, the cloud platform generates the unlocking information, where the unlocking information is used to indicate that the user has paid the fee for using the paid charge amount interval of the battery cell, and is able to control the vehicle to unlock the battery cell in the locked state. Afterwards, the cloud platform can send the unlocking information to the vehicle through satellite communication, so that the vehicle can perform unlocking processing on the paid charge amount interval of the battery cell to enable the battery cell to continue discharging, thereby satisfying the charge amount usage needs of the user, and ensuring the safe and stable operation of the vehicle at the same time.

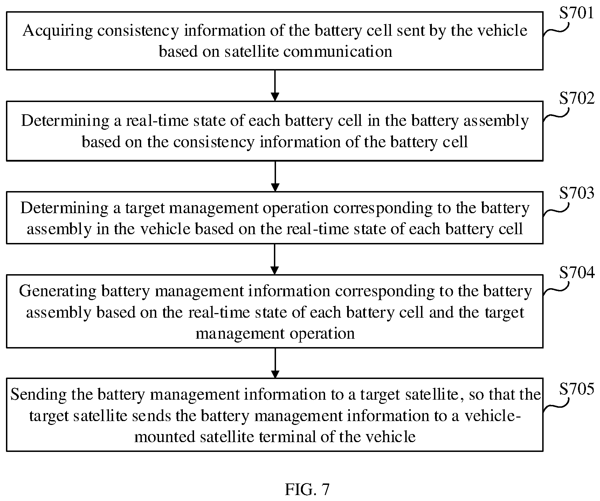

FIG. 7 is a flow diagram of a vehicle battery management method based on satellite communication according to a sixth embodiment of the present application. As shown in FIG. 7, the vehicle battery management method based on satellite communication includes the following steps.

S701: acquiring consistency information of the battery cell sent by the vehicle based on satellite communication.

S702: determining a real-time state of each battery cell in the battery assembly based on the consistency information of the battery cell.

S703: determining a target management operation corresponding to the battery assembly of the vehicle based on the real-time state of each battery cell.

S704: generating battery management information corresponding to the battery assembly based on the real-time state of each battery cell and the target management operation.

In the present application, the cloud platform acquires the consistency information sent by the vehicle based on satellite communication, and can determine the real-time state of each battery cell according to the consistency information. The real-time state may specifically be a fault state (i.e. an abnormal state) or a normal state, etc. For example, when a voltage of a certain battery cell is lower than a normal range, the capacity decreases, or the temperature rises abnormally, the cloud platform may determine that the battery cell is in the fault state. Then, the cloud platform may determine the target management operation corresponding to the battery assembly based on the real-time state of each battery cell, where the target management operation may be a safety management measure performed for the battery cell in the fault state, for example, stopping charging the battery, limiting its discharging rate, or reminding maintenance personnel to replace the battery in time, and the like. Of course, the real-time state of the battery cell may also be other types, and there may be other target management operations correspondingly, which is not limited in the present application.

After determining the real-time state of the battery cell and the target management operation of the battery assembly, the cloud platform may generate the battery management information of the vehicle based on the real-time state and the target management operation. In this way, based on consistency information, the cloud platform can rapidly identify the battery cell in the fault state or the abnormal state, and can determine corresponding safety management measures, thereby ensuring the overall stability and safety of the battery assembly.

S705: sending the battery management information to a target satellite, so that the target satellite sends the battery management information to a vehicle-mounted satellite terminal of the vehicle.

In the present application, after generating the battery management information, the cloud platform may send the battery management information to the target satellite. The target satellite receives the battery management information, and can send the battery management information to the vehicle-mounted satellite terminal of the vehicle. The control unit of the vehicle may acquire the battery management information, and implement safety management for the battery assembly based on the battery management information. In this way, the cloud platform performs data interaction with the vehicle based on satellite communication, which can ensure high efficiency and reliability of data transmission and improve real-time performance of vehicle battery management.

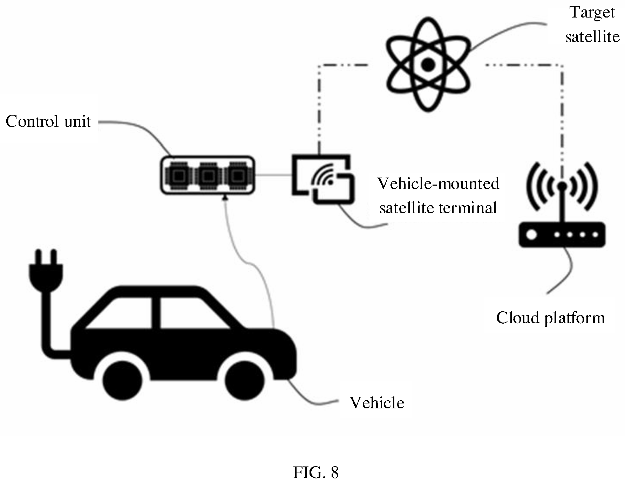

On the basis of the above-mentioned embodiments, FIG. 8 is a schematic system architectural diagram of a vehicle battery management method based on satellite communication according to the present application. As shown in FIG. 8, after a charge amount in a free charge amount interval of a battery cell in a battery assembly of a vehicle is exhausted and the battery cell is locked, the vehicle can display, through an output apparatus, confirmation information for use of a paid charge amount. After receiving the confirmation information for use of the paid charge amount, the user needs to select whether to pay the fee according to actual needs. After the user completes the payment operation, the payment system generates payment confirmation information, and sends the payment confirmation information to a cloud platform through the network. After receiving payment confirmation information, the cloud platform can perform parsing and verification so as to confirm the payment status of the user. Once it is confirmed that the user has completed the payment, the cloud platform generates unlocking information correspondingly. Then, the cloud platform may send the unlocking information to a target satellite, and then the target satellite sends the unlocking information to a vehicle-mounted satellite terminal of the vehicle, so that the vehicle can unlock the battery cell through a control unit and a battery management unit, thereby enable the battery cell to continue discharging.

In addition, interaction of consistency information can also be implemented between the vehicle and the cloud platform based on satellite communication, so as to further achieve real-time safety management for the battery assembly of the vehicle. Specifically, the control unit of the vehicle collects the consistency information of the battery assembly according to a preset period through the battery management unit, and then the vehicle sends the consistency information to the target satellite through the vehicle-mounted satellite terminal. After receiving the consistency information, the target satellite sends the consistency information to the cloud platform of the cloud server. The cloud platform receives the consistency information, and generates the battery management information based on the consistency information, and then the cloud platform returns the battery management information to the target satellite. The target satellite receives the battery management information and forwards the battery management information to the vehicle-mounted satellite terminal. The control unit of the vehicle can implement real-time safety management for the vehicle battery assembly based on the battery management information, thereby ensuring the safety and stability of the vehicle battery assembly.

The present application also provides a vehicle battery management system based on satellite communication, including a vehicle, a target satellite and a cloud platform; where the vehicle is configured to receive unlocking information sent by the cloud platform through satellite communication after a charge amount in a free charge amount interval of a battery cell in a battery assembly of the vehicle is exhausted and the battery cell is locked, where the unlocking information is used to indicate that a user has paid a fee for using a paid charge amount interval of the battery cell; and the vehicle is configured to perform an unlocking process on use of the battery cell, so that the battery cell continues discharging, where the charge amount of each battery cell in the battery assembly is configured with a free charge amount interval for a user to freely use and a paid charge amount interval that requires payment to unlock and use.

The target satellite is configured to receive the unlocking information sent by the cloud platform, where the unlocking information is used to indicate that the user has paid the fee for using the paid charge amount interval of the battery cell in the battery assembly of the vehicle; and the target satellite is configured to send the unlocking information to the vehicle.

The cloud platform is configured to generate the unlocking information after determining that the user has paid the fee for using the paid charge amount interval of the battery cell in the battery assembly, where the unlocking information is used to indicate that the user has paid the fee for using the paid charge amount interval of the battery cell; and the cloud platform is configured to send the unlocking information to the vehicle through satellite communication.

Optionally, in the vehicle battery management system based on satellite communication, the vehicle is further configured to detect consistency information of the battery assembly of the vehicle , and send the consistency information to the target satellite;
the target satellite is further configured to receive the consistency information sent by the vehicle and send the consistency information to the cloud platform;
the cloud platform is further configured to determine battery management information corresponding to the battery assembly of the vehicle based on the consistency information, and send the battery management information to the target satellite;
the target satellite is further configured to receive the battery management information sent by the cloud platform, and send the battery management information to the vehicle; and
the vehicle is further provided to receive the battery management information, and manage the battery assembly according to the battery management information.

The vehicle battery management system based on satellite communication provided in this embodiment can be configured to execute the vehicle battery management method based on satellite communication in any one of the above-mentioned method embodiments, and the implementation principle and technical effect thereof are similar, which will not be repeated herein.

The embodiments of the present application further provide a computer-readable storage medium, where the computer-readable storage medium stores computer execution instructions which, when being executed, are configured to implement the above-mentioned vehicle battery management method based on satellite communication.

Those ordinary skilled in the art may understand that all or part of the steps in the above-mentioned method may be completed by a program instructing relevant hardware (such as a processor), and the program may be stored in a computer-readable storage medium, such as a read-only memory, a magnetic disk, or an optical disk. Optionally, all or part of the steps of the above-mentioned embodiments may also be implemented by using one or more integrated circuits. Accordingly, each module/unit in the above-mentioned embodiments may be implemented in the form of hardware, such as the corresponding function thereof is implemented by an integrated circuit, and may also be implemented in the form of software functional module, such as the corresponding function thereof is implemented by a processor executing a program/instruction stored in a memory. The embodiments of the present invention are not limited to any specific form of combination of hardware and software.

The above-mentioned embodiments are merely illustrative of the principles and effects of the embodiments of the present invention, and are not intended to limit the embodiments of the present invention. Those skilled in the art may make modifications or alterations to the above-mentioned embodiments without departing from the spirit and scope of the embodiments in the present invention. Therefore, all equivalent modifications or changes made by those ordinary skilled in the art without departing from the spirit and technical ideas disclosed in the embodiments of the present invention shall still be covered by the claims of the embodiments of the present invention.

## Claims

1. A vehicle battery management method based on satellite communication, comprising:
receiving, after a charge amount in a free charge amount interval of a battery cell in a battery assembly of a vehicle is exhausted and the battery cell is locked, unlocking information sent by a cloud platform through satellite communication, wherein the unlocking information is used to indicate that a user has paid a fee for using a paid charge amount interval of the battery cell; and
performing an unlocking process on use of the battery cell to enable the battery cell to continue discharging;
wherein the charge amount of each battery cell in the battery assembly is configured with a free charge amount interval for a user to freely use and a paid charge amount interval that requires payment to unlock and use.

2. The method according to claim 1, further comprising:
detecting consistency information of the battery assembly;
sending the consistency information to the cloud platform based on satellite communication; and
receiving battery management information returned by the cloud platform based on satellite communication, and managing the battery assembly according to the battery management information.

3. The method according to claim 2, wherein:
the consistency information is detected through a battery management unit of the battery assembly according to a preset time period; wherein the consistency information comprises consistency information of the battery cell, consistency information of the free charge amount interval, and consistency information of the paid charge amount interval.

4. The method according to claim 2, wherein:
the consistency information is sent to a target satellite through a vehicle-mounted satellite terminal, so that the target satellite sends the consistency information to the cloud platform.

5. The method according to claim 2, wherein:
an operating state of the battery cell in the battery assembly is controlled according to the battery management information, wherein the operating state of the battery cell comprises a locked state, an unlocked state, a charging state or a discharging state.

6. The method according to any one of claims 2-5, further comprising:
sending target prompt information to an output apparatus according to the battery management information, so that the output apparatus displays the target prompt information; wherein the output apparatus comprises a vehicle-mounted terminal and/or a mobile terminal; and the target prompt information comprises at least one of payment information, alarm information and vehicle management operation information.

7. A vehicle battery management method based on satellite communication, comprising:
receiving unlocking information sent by a cloud platform, wherein the unlocking information is used to indicate that a user has paid a fee for using a paid charge amount interval of a battery cell in a battery assembly of a vehicle; and
sending the unlocking information to the vehicle.

8. The method according to claim 7, further comprising:
acquiring consistency information sent by the vehicle, and sending the consistency information to the cloud platform; and
receiving battery management information returned by the cloud platform, and sending the battery management information to the vehicle.

9. A vehicle battery management method based on satellite communication, comprising:
generating unlocking information after determining that a user has paid a fee for using a paid charge amount interval of a battery cell in a battery assembly of a vehicle, wherein the unlocking information is used to indicate that the user has paid the fee for using the paid charge amount interval of the battery cell; and
sending the unlocking information to the vehicle through satellite communication.

10. The method according to claim 9, further comprising:
acquiring consistency information sent by the vehicle based on satellite communication;
determining battery management information corresponding to the battery assembly based on the consistency information; and
sending the battery management information to the vehicle through satellite communication.

11. The method according to claim 10, wherein:
a real-time state of each battery cell in the battery assembly is determined based on the consistency information;
a target management operation corresponding to the battery assembly is determined based on the real-time state of each battery cell; and
the battery management information corresponding to the battery assembly is generated based on the real-time state of each battery cell and the target management operation.

12. The method according to claim 10 or 11, wherein:
the battery management information is sent to a target satellite, so that the target satellite sends the battery management information to a vehicle-mounted satellite terminal of the vehicle.
